# FASCICULE DE BREVET EUROPEEN

(11) **EP 0 767 298 B1**
(45) Date de publication et mention de la délivrance du brevet: **16.07.2003**
(21) Numéro de dépôt: 96115938.1
(22) Date de dépôt: 04.10.1996
(51) Int. Cl.: F01P 3/18, B60K 11/00, F28F 9/00

(54) **Dispositif de fixation d'un échangeur de chaleur fonctionnant à température élevée**
Befestigungsvorrichtung für einen Hochtemperatur-Wärmetauscher
Device for mounting a high temperature heat exchanger

(30) Priorité: 06.10.1995 FR 9511817
(43) Date de publication de la demande: 09.04.1997
(73) Titulaire: VALEO THERMIQUE MOTEUR S.A., 78321 La Verrière (FR)
(72) Inventeur: Laveran, Jean-Louis, 92600 Asnieres s/Seine (FR)
(74) Mandataire: Rolland, Jean-Christophe

(56) Documents cités:
- EP-A- 0 440 400
- EP-A- 0 494 353
- WO-A-79/00967
- GB-A- 2 035 536
- US-A- 3 317 707
- US-A- 3 910 542
- US-A- 4 355 780
- US-A- 4 534 407
- US-A- 4 596 285
- US-A- 5 127 466

## Description

L'invention concerne la fixation sur un support, solidaire du châssis et/ou de la carrosserie d'un véhicule, d'un échangeur de chaleur destiné à être parcouru par un fluide à température élevée.

Les dispositifs de fixation connus ont généralement pour effet d'immobiliser les surfaces de contact respectives de l'échangeur de chaleur et du support les unes par rapport aux autres dans toutes les zones de fixation. Il en résulte, lors des dilatations thermiques de l'échangeur de chaleur au cours de son fonctionnement, des contraintes mécaniques qui peuvent se traduire par des déformations permanentes ou la rupture de pièces ou de soudure.

EP-A-0 440 400 décrit un procédé conforme au préambule de la revendication 1.

US-A-4 355 780 décrit un dispositif de fixation sur un support d'un échangeur de chaleur destiné à être parcouru par un fluide à température élevée, dans lequel les surfaces de contact de chaque zone de glissement peuvent se déplacer librement l'une par rapport à l'autre.

Le but de l'invention est de fixer efficacement l'échangeur de chaleur, tout en absorbant sans contraintes mécaniques excessives sa dilatation thermique.

L'invention vise un procédé selon les revendications 1 à 11, et un ensemble selon la revendication 12.

Les caractéristiques et avantages de l'invention seront exposés plus en détail dans la description ci-après, en se référant aux dessins annexés, sur lesquels :
- la figure 1 est une vue en élévation d'un échangeur de chaleur selon l'invention; et
- les figures 2 et 3 sont des vues partielles en coupe, respectivement selon la ligne II-II de la figure 3 et selon la ligne III-III de la figure 1, d'un dispositif de fixation pour l'échangeur de la figure 1, limitées à une zone de glissement.

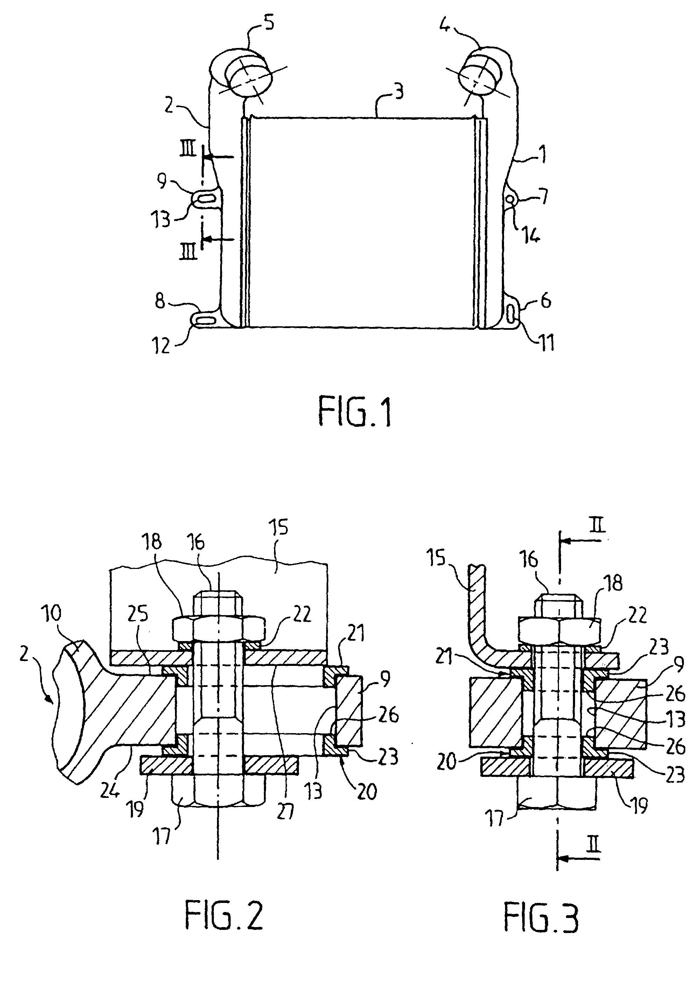

La figure 1 représente un radiateur de refroidissement d'air de suralimentation pour le moteur thermique d'un véhicule automobile, comprenant de façon classique une boîte à fluide d'entrée 1, une boîte à fluide de sortie 2 et un faisceau de tubes 3. Les deux boîtes à fluide sont allongées dans une même direction, verticale sur la figure, et se raccordent à leur extrémité supérieure respectivement à une tubulure d'entrée 4 et à une tubulure de sortie 5 pour l'air à refroidir. Le faisceau 3, de forme générale parallélépipédique rectangle, s'étend de l'une à l'autre des boîtes à fluide et comporte une multiplicité de tubes non représentés individuellement, allongés horizontalement et mutuellement alignés de haut en bas de la figure, les deux extrémités de chaque tube débouchant respectivement dans les deux boîtes à fluide. Ainsi, l'air à refroidir peut passer de la boîte à fluide 1 à la boîte à fluide 2 en circulant en parallèle dans les différents tubes du faisceau 3, où il est refroidi par un courant d'air traversant celui-ci perpendiculairement au plan de la figure.

Chacune des boîtes à fluide présente deux pattes de fixation référencées 6 et 7 pour la boîte à fluide 1, 8 et 9 pour la boîte à fluide 2. Ces pattes sont par exemple moulées d'une seule pièce avec les boîtes à fluide en alliage d'aluminium, de façon à s'étendre selon le plan médian de l'échangeur de chaleur, parallèle au plan de la figure 1, en faisant saillie orthogonalement par rapport à la paroi 10 (figure 2) de chaque boîte à fluide, à l'opposé de l'autre boîte à fluide. Les pattes 6 et 8 sont adjacentes aux extrémités des boîtes à fluide opposées aux tubulures 4 et 5, et les pattes 7 et 9 sont écartées des pattes 6 et 8 en direction de ces tubulures. Selon l'invention, la patte 6 de la boîte à fluide 1 et les pattes 8 et 9 de la boîte à fluide 2 sont traversées par des trous allongés respectifs 11, 12 et 13. Le trou 11 est allongé dans la direction longitudinale des boîtes à fluide, et les trous 12 et 13 dans la direction longitudinale des tubes du faisceau 3. La patte 7 est quant à elle traversée par un trou circulaire 14 qui se trouve à la fois sensiblement dans l'alignement du trou 11 et dans celui du trou 13.

Comme le montrent les figures 2 et 3 à titre d'exemple pour la patte 9, chacune des pattes 6 à 9 est destinée à être appliquée sur une patte 15 solidaire du châssis ou de la carrosserie du véhicule pour la fixation de l'échangeur de chaleur. Cette fixation est réalisée au moyen d'un boulon 16 dont la tige traverse le trou 13 et qui serre, entre sa tête 17 et son écrou 18, un empilement composé, dans l'ordre, d'une rondelle en acier 19, d'une première rondelle intercalaire 20, de la patte 9, d'une seconde rondelle intercalaire 21, de la patte 15 et d'une rondelle frein d'écrou 22. Chacune des rondelles intercalaires 20 et 21 a une forme annulaire et une section en L comprenant une branche extérieure 23 qui est serrée entre la rcndelle 19, ou la patte 15, et la face en regard 24, 25 de la patte 9, et une branche intérieure 26 sensiblement adjacente à la paroi du trou 13. Les rondelles intercalaires 20 et 21 sont réalisées par exemple en alliage fritté imbibé d'huile, de façon à présenter un faible coefficient de frottement et une bonne résistance à la compression. La patte 7 peut être fixée de façon classique grâce à son trou circulaire 14.

Lorsque les différentes parties de l'échangeur de chaleur sont en équilibre thermique, le boulon 16 assure l'immobilisation mutuelle de tous les éléments qu'il traverse, et en particulier des pattes 9 et 15. Les pattes 6 et 8 sont immobilisées de la même façon, et la patte 7 de façon classique, par rapport au châssis du véhicule, ce qui assure une fixation stable de l'échangeur de chaleur.

Le commencement et l'arrêt du fonctionnement du moteur, et les changements de régime, provoquent une dilatation différentielle des différentes parties de l'échangeur de chaleur. La boîte à fluide 1, par où entre l'air à refroidir, peut par exemple être portée à 180°C, et la boîte à fluide 2, par laquelle l'air refroidi sort, à 75°C. Ceci entraîne une variation importante d'une part de la longueur de la boîte à fluide 1, d'autre part de la distance entre les deux boîtes à fluide, par rapport à l'état de repos à température ambiante. La patte 6 a donc tendance à s'éloigner de la patte 7, et les pattes 8 et 9 respectivement des pattes 6 et 7. Ces mouvements sont permis par le dispositif selon l'invention, la patte 9 par exemple pouvant glisser, accompagnée par les rondelles intercalaires 20 et 21, par rapport à la rondelle 19 et à la surface de contact 27 de la patte 15, qui sont solidaires du boulon 16, la tige de celui-ci se déplaçant le long du trou 13.

Les variations de température étant moins importantes pour la boîte à fluide 2 que pour la boîte à fluide 1, il n'est pas nécessaire, dans l'exemple décrit, de prévoir une possibilité de glissement des pattes 8 et 9 dans la direction longitudinale des boîtes à fluide.

## Revendications

1. Procédé de fixation sur un support (15), solidaire du châssis et/ou de la carrosserie d'un véhicule, d'un échangeur de chaleur (1-3) destiné à être parcouru par un fluide à température élevée, notamment d'un radiateur de refroidissement de l'air de suralimentation du moteur thermique du véhicule, faisant appel à des moyens de fixation répartis sur au moins des première, seconde et troisième zones de fixation (6, 9, 7), les première et seconde zones étant éloignées de la troisième zone dans des directions respectives différentes, les moyens de fixation comprenant, dans chacune desdites zones, au moins une surface de contact (27) appartenant au support (15), au moins une surface de contact (25) appartenant à l'échangeur et un organe de serrage (16) propre à solliciter l'une vers l'autre lesdites surfaces de contact, avec interposition éventuelle d'au moins un élément intercalaire (21), les moyens de fixation étant propres à permettre, dans chacune des première et seconde zones, un déplacement relatif des surfaces de contact du support et de l'échangeur dans une direction déterminée, **caractérisé en ce que** les moyens de fixation interdisent tout déplacement relatif desdites surfaces de contact dans la troisième zone, la direction du déplacement relatif dans chacune des première et seconde zones étant sensiblement confondue avec la direction d'éloignement de cette zone par rapport à la troisième zone, et **en ce qu'**on serre les moyens de serrage des première et seconde zones de manière à permettre un glissement relatif des surfaces de contact correspondantes du support et de l'échangeur lors de la dilatation thermique de l'échangeur, tout en assurant leur immobilisation mutuelle lorsque celui-ci est en équilibre thermique.

2. Procédé selon la revendication 1 pour la fixation d'un échangeur de chaleur comprenant au moins une première boîte à fluide allongée (1) par laquelle le fluide pénètre dans l'échangeur et/ou en sort, communiquant avec au moins une rangée (3) de tubes de circulation de fluide alignés dans la direction longitudinale de la boîte à fluide et allongés transversalement à celle-ci, dans lequel lesdites première et troisième zones de fixation (6, 7) sont situées au voisinage de la première boîte à fluide, la direction de déplacement relatif de la première zone étant la direction longitudinale de la première boîte à fluide.

3. Procédé selon l'une des revendications 1 et 2 pour la fixation d'un échangeur de chaleur comprenant des première et seconde boîtes à fluide allongées et parallèles (1, 2) par lesquelles le fluide pénètre dans l'échangeur et en sort, reliées entre elles par au moins une rangée (3) de tubes de circulation de fluide alignés dans la direction longitudinale des boîtes à fluide et allongés transversalement à celle-ci, dans lequel lesdites seconde et troisième zones de fixation (9, 7) sont situées au voisinage des seconde et première boîtes à fluide respectivement, la direction de déplacement relatif de la seconde zone étant la direction longitudinale des tubes.

4. Procédé selon la revendication 3, rattachée à la revendication 2, pour la fixation d'un échangeur destiné à refroidir un fluide qui y pénétre à température élevée par la première boîte à fluide (1) et en ressort à une température sensiblement plus basse par la seconde boîte à fluide (2), comportant une quatrième zone de fixation (8) située au voisinage de la seconde boîte à fluide et éloignée, dans la direction longitudinale de celle-ci, de la seconde zone de fixation (9), un déplacement relatif des surfaces de contact de la quatrième zone étant autorisé dans la direction longitudinale des tubes.

5. Procédé selon la revendication 4, **caractérisé en ce que** les première et quatrième zones de fixation sont mutuellement alignées sensiblement dans la direction longitudinale des tubes.

6. Procédé selon l'une des revendications 2 à 5, **caractérisé en ce qu'**on prévoit, dans chacune des première, seconde, et le cas échéant quatrième zones de fixation, une patte (9) en saillie sur la paroi (10) de la boîte à fluide correspondante, dont l'une (25) des faces définit une surface de contact de l'échangeur et dans laquelle est ménagée une ouverture (13) traversée par un organe de serrage tel qu'un boulon (16), fixe par rapport au support (15), ladite ouverture étant allongée dans la direction de déplacement pour permettre à l'organe de serrage de s'y déplacer par rapport à la patte (9).

7. Procédé selon la revendication 6, **caractérisé en ce que** l'organe de serrage assure le serrage d'un empilement comprenant, dans l'ordre, une patte de fixation (15) solidaire du support, un premier élément intercalaire (21) sous forme d'une rondelle, ladite patte (9) de la boîte à fluide et un second élément intercalaire (20) sous forme d'une rondelle.

8. Procédé selon la revendication 7, **caractérisé en ce que** chaque rondelle intercalaire (20, 21) comprend, juxtaposées dans la direction de l'empilement, une région extérieure (23) de largeur supérieure à la largeur de l'ouverture allongée, qui s'appuie sur la face correspondante (24, 25) de la patte de la boîte à fluide, et une région intérieure (26) de largeur légèrement inférieure à la largeur de l'ouverture (13), qui pénètre dans l'ouverture et assure le guidage de l'organe de serrage le long de celle-ci.

9. Procédé selon l'une des revendications 2 à 8, **caractérisé en ce qu'**on prévoit, dans la troisième zone de fixation, une patte (7) en saillie sur la paroi de la boîte à fluide correspondante (1), dont l'une des faces définit une surface de contact de l'échangeur et dans laquelle est ménagée une ouverture circulaire (14) traversée par un organe de serrage tel qu'un boulon, de manière à immobiliser ladite patte par rapport au support.

10. Procédé selon l'une des revendications 6 à 9, **caractérisé en ce que** lesdites pattes s'étendent toutes selon un même plan médian de l'échangeur de chaleur, parallèle aux directions longitudinales des boîtes à fluide et des tubes, et sensiblement orthogonalement aux parois des boîtes à fluide.

11. Procédé selon l'une des revendications précédentes, **caractérisé en ce que** les éléments intercalaires (20, 21) sont en un matériau à faible coefficient de frottement et bonne résistance à la compression.

12. Ensemble tel qu'on peut l'obtenir par le procédé selon l'une des revendications précédentes, comprenant un échangeur de chaleur (1-3) destiné à être parcouru par un fluide à température élevée, et un support (15) pour recevoir l'échangeur de chaleur sur le châssis et/ou sur la carrosserie d'un véhicule, cet ensemble étant muni de moyens de fixation de l'échangeur sur le support répartis sur au moins des première, seconde et troisième zones de fixation (6, 9, 7), les première et seconde zones étant éloignées de la troisième zone dans des directions respectives différentes, les moyens de fixation comprenant, dans chacune desdites zones, au moins une surface de contact (27) appartenant au support (15), au moins une surface de contact (25) appartenant à l'échangeur et un organe de serrage (16) propre à solliciter l'une vers l'autre lesdites surfaces de contact, avec interposition éventuelle d'au moins un élément intercalaire (21), les moyens de fixation étant propres à permettre, dans chacune des première et seconde zones, un déplacement relatif des surfaces de contact du support et de l'échangeur dans une direction déterminée, et interdisant tout déplacement relatif desdites surfaces de contact dans la troisième zone, la direction du déplacement relatif dans chacune des première et seconde zones étant sensiblement confondue avec la direction d'éloignement de cette zone par rapport à la troisième zone, et les moyens de serrage des première et seconde zones étant serrés de manière à permettre un glissement relatif des surfaces de contact correspondantes du support et de l'échangeur lors de la dilatation thermique de l'échangeur, tout en assurant leur immobilisation mutuelle lorsque celui-ci est en équilibre thermique.

## Patentansprüche

1. Verfahren, um an einem fest mit einem Rahmen und/oder der Karosserie eines Fahrzeugs verbunden Träger (15) einen Wärmetauscher (1-3) zu befestigen, der von einem Fluid mit erhöhter Temperatur durchlaufen werden soll, insbesondere einem Kühler zur Kühlung der Ladeluft des Wärmekraftmotors des Fahrzeugs, wobei das Verfahren das Befestigungsmittel einsetzt, die auf zumindest einem ersten, zweiten und dritten Befestigungsbereich (6, 9, 7) verteilt sind, wobei der erste und zweite Bereich vom dritten Bereich in jeweils unterschiedlichen Richtungen entfernt sind, wobei die Befestigungsmittel in jedem der Bereiche zumindest eine dem Träger (15) angehörende Kontaktfläche (27), zumindest eine dem Wärmetauscher angehörende Kontaktfläche (25) und ein Festspannorgan (16) umfassen, das geeignet ist die Kontaktflächen unter Einsetzung eventuell eines Einlegeelements (21) zueinander zu bringen, wobei die Befestigungsmittel geeignet sind, in jedem der ersten und zweiten Bereiche eine Relativbewegung der Kontaktflächen des Trägers und des Wärmetauschers in einer vorbestimmten Richtung zu gestatten, **dadurch gekennzeichnet, dass** die Befestigungsmittel jede Relativbewegung der Kontaktflächen in dem dritten Bereich unterbinden, wobei die Richtung der Relativbewegung in dem ersten und zweiten Bereich im Wesentlichen mit der Richtung der Entfernung dieses Bereichs relativ zum dritten Bereich zusammenfällt, und dass die Festspannmittel des ersten und zweiten Bereichs so festgespannt werden, dass sie eine gleitende Relativbewegung der entsprechenden Kontaktflächen des Trägers und des Wärmetauschers bei der Wärmeausdehnung des Wärmetauschers gestattet, während sie für ihre wechselseitige Fixierung sorgen, wenn dieser im thermischen Gleichgewicht ist.

2. Verfahren nach Anspruch 1 zur Befestigung eines Wärmetauschers mit zumindest einem ersten, länglichen Fluidkasten (1), durch den das Fluid in den Wärmetauscher ein- und/oder daraus austritt, der mit zumindest eine Reihe (3) von Rohren zur Fluidzirkulation in Verbindung steht, die in der Längsrichtung des Fluidkastens ausgerichtet und quer zu diesem länglich sind, bei dem der erste und dritte Befestigungsbereich (6, 7) in der Nachbarschaft des ersten Fluidkastens liegen, wobei die Richtung der Relativbewegung des ersten Bereichs die Längsrichtung des ersten Fluidkastens ist.

3. Verfahren nach einem der Ansprüche 1 und 2 für die Befestigung eines Wärmetauschers mit ersten und zweiten, länglichen und parallelen Fluidkästen (1, 2) durch die das Fluid in den Wärmetauscher ein- und daraus austritt, die untereinander durch zumindest eine Reihe (3) von Rohren zur Fluidzirkulation verbunden sind, die in der Längsrichtung der Fluidkästen ausgerichtet und quer zu diesem länglich sind, bei der der zweite und dritte Befestigungsbereich (9, 7) in der Nachbarschaft des zweiten beziehungsweise ersten Fluidkastens liegen, wobei die Richtung der Relativbewegung des zweiten Bereichs die Längsrichtung der Rohre ist.

4. Verfahren nach Anspruch 3 in Verbindung mit Anspruch 2, für die Befestigung eines Wärmetauschers, der ein Fluid kühlen soll, das in ihn mit einer erhöhten Temperatur durch den Fluidkasten (1) eindringt und daraus mit einer wesentlich niedrigeren durch den zweiten Fluidkasten (2) austritt, mit einem vierten Befestigungsbereich (8), der in der Nachbarschaft des zweiten Fluidkastens liegt und in dessen Längsrichtung von dem zweiten Befestigungsbereich (9) entfernt ist, wobei eine Relativbewegung der Kontaktflächen des vierten Bereichs in der Längsrichtung der Rohre zugelassen ist.

5. Verfahren nach Anspruch 4, **dadurch gekennzeichnet, dass** das der erste und vierte Befestigungsbereich wechselseitig im Wesentlichen in der Längsrichtung der Rohre ausgerichtet sind.

6. Verfahren nach einem der Ansprüche 2 bis 5, **dadurch gekennzeichnet, dass** bei jedem der ersten, zweiten und gegebenenfalls vierten Befestigungsbereiche einen von der Wand (10) des entsprechenden Fluidkastens vorspringen Fuß (9) vorsieht, von dessen eine Seite (25) eine Kontaktfläche des Wärmetauschers begrenzt und in dem eine Öffnung (13) ausgebildet ist, die von einem relativ zum Träger (15) festen Festspannorgan wie beispielsweise einem Schraubenbolzen (16) durchquert wird, wobei die Öffnung in der Bewegungsrichtung länglich ist, um es dem Festspannorgan zu gestatten, sich relativ zu dem Fuß (9) zu bewegen.

7. Verfahren nach Anspruch 6, **dadurch gekennzeichnet, dass** das Festspannorgan für das Festklemmen eines Stapels sorgt, der in dieser Reihenfolge einen mit dem Träger fest verbundenen Befestigungsfuß (15), ein erstes Einlegeelement in Form einer Scheibe, den Fuß (9) des Fluidkastens und ein zweites Einlegeelement (20) in Form einer Scheibe umfasst.

8. Verfahren nach Anspruch 7, **dadurch gekennzeichnet, dass** jeder Einlegescheibe (20, 21) in Richtung des Stapels nebenenander liegend einen Außenbereich (23) mit einer Breite, die größer als die Breite der länglichen Öffnung ist, der an der entsprechenden Seite (24, 25) des Fußes des Fluidkastens anliegt, und einen Innenbereich (26) mit einer Breite umfasst, die geringfügig geringer als die Breite des Öffnung (13) ist, der in die Öffnung eindringt und für die Führung des Festspannorgans längs dieser sorgt.

9. Verfahren nach einem der Ansprüche 2 bis 8, **dadurch gekennzeichnet, dass** in dem dritten Befestigungsbereich eine auf der Wand der entsprechenden Fluidkastens (1) vorspringender Fuß (7) vorgesehen ist, dessen eine Seite eine Kontaktfläche des Wärmetauschers begrenzt und in der eine kreisförmige Öffnung (14) ausgebildet ist, die von einem Festspannorgan, wie beispielsweise einem Schraubenbolzen, durchquert wird, um den Fuß relativ zum Träger zu fixieren.

10. Verfahren nach einem der Ansprüche 6 bis 9, **dadurch gekennzeichnet, dass** die Füße sich in einer gemeinsamen Mittelebene des Wärmetauschers erstrecken, die parallel zu den Längsrichtungen der Fluidkästen und der Rohre und im Wesentlichen senkrecht zu den Wänden der Fluidkästen ist.

11. Verfahren nach einem der vorhergehenden Ansprüche, **dadurch gekennzeichnet, dass** die Einlegeelemente (20, 21) aus einem Material mit geringem Reibkoeffizient und guter Kompressionsbeständigkeit bestehen.

12. Baugruppe, wie sie durch das Verfahren nach einem der vorhergehenden Ansprüche erhalten werden kann, mit einem Wärmetauscher (1-3), der von einem Fluid mit erhöhter Temperatur durchlaufen werden soll, und einem Träger (15), um den Wärmetauscher an dem Chassis und/oder der Karosserie eines Fahrzeugs aufzunehmen, wobei diese Baugruppe mit Befestigungsmitteln für den Wärmetauscher an dem Träger versehen sind, die auf zumindest einem ersten, zweiten und dritten Befestigungsbereich (6, 9, 7) verteilt sind, wobei der erste und zweite Bereich vom dritten Bereich in jeweils unterschiedlichen Richtungen entfernt sind, wobei die Befestigungsmittel in jedem der Bereiche zumindest eine dem Träger (15) angehörende Kontaktfläche (27), zumindest eine dem Wärmetauscher angehörende Kontaktfläche (25) und ein Festspannorgan (16) umfassen, das geeignet ist die Kontaktflächen unter Einsetzung eventuell eines Einlegeelements (21) zueinander zu bringen, wobei die Befestigungsmittel geeignet sind, in jedem der ersten und zweiten Bereiche eine Relativbewegung der Kontaktflächen des Trägers und des Wärmetauschers in einer vorbestimmten Richtung zu gestatten, **dadurch gekennzeichnet, dass** die Befestigungsmittel jede Relativbewegung der Kontaktflächen in dem dritten Bereich unterbinden, wobei die Richtung der Relativbewegung in dem ersten und zweiten Bereich im Wesentlichen mit der Richtung der Entfernung dieses Bereichs relativ zum dritten Bereich zusammenfällt, und dass die Festspannmittel des ersten und zweiten Bereichs so festgespannt werden, dass sie eine gleitende Relativbewegung der entsprechenden Kontaktflächen des Trägers und des Wärmetauschers bei der Wärmeausdehnung des Wärmetauschers gestattet, während sie für ihre wechselseitige Fixierung sorgen, wenn dieser im thermischen Gleichgewicht ist.

## Claims

1. Method for mounting on a support (15), secured to the chassis and/or the bodywork of a vehicle, a heat exchanger (1-3) intended to have a fluid at high temperature running through it, particularly an intercooler for cooling the supercharging air for the combustion engine of the vehicle, calling upon mounting means distributed over at least first, second and third mounting regions (6, 9, 7), the first and second regions being remote from the third region in different respective directions, the mounting means comprising, in each of the said regions, at least one contact surface (27) belonging to the support (15), at least one contact surface (25) belonging to the exchanger and a tightening member (16) able to urge the said contact surfaces towards each other, with the possible insertion of at least one insert element (21), the mounting means being able, in each of the first and second regions, to allow relative displacement of the contact surfaces of the support and of the exchanger in a determined direction, **characterized in that** the mounting means prevent any relative displacement of the said contact surfaces in the third region, the direction of the relative displacement in each of the first and second regions being more or less coincident with the direction in which this region is separated from the third region, and **in that** the tightening means of the first and second regions are tightened in such a way as to allow relative sliding of the corresponding contact surfaces of the support and of the exchanger as the exchanger experiences thermal expansion, while at the same time immobilizing them one with respect to the other when this heat exchanger is in thermal equilibrium.

2. Method according to Claim 1 for mounting a heat exchanger comprising at least a first elongate fluid box (1) via which the fluid enters and/or leaves the exchanger, communicating with at least one row (3) of fluid circulation tubes aligned in the longitudinal direction of the fluid box and elongated transversely thereto, in which method the said first and third mounting regions (6, 7) are situated near the first fluid box, the direction of relative displacement of the first region being the longitudinal direction of the first fluid box.

3. Method according to one of Claims 1 and 2 for mounting a heat exchanger comprising first and second elongate and parallel fluid boxes (1, 2) via which the fluid enters and leaves the exchanger, these being joined together by at least one row (3) of fluid circulation tubes aligned in the longitudinal direction of the fluid boxes and elongated transversely thereto, in which method the second and third mounting regions (9, 7) are situated near the second and first fluid boxes respectively, the direction of relative displacement of the second region being the longitudinal direction of the tubes.

4. Method according to Claim 3 attached to Claim 2, for mounting an exchanger intended to cool a fluid that enters at high temperature via the first fluid box (1) and leaves it at an appreciably lower temperature via the second fluid box (2), comprising a fourth mounting region (8) situated in the vicinity of the second fluid box and distant, in the longitudinal direction thereof, from the second mounting region (9), a relative displacement of the contact surfaces of the fourth region being allowed in the longitudinal direction of the tubes.

5. Method according to Claim 4, **characterized in that** the first and fourth mounting regions are aligned with each other more or less in the longitudinal direction of the tubes.

6. Method according to one of Claims 2 to 5, **characterized in that** there is provided, in each of the first, second and, as appropriate, fourth, mounting regions, a lug (9) projecting from the wall (10) of the corresponding fluid box, one (25) of the faces of which defines a contact surface of the exchanger and in which an opening (13) is formed, through which opening a tightening member such as a bolt (16), mounted with respect to the support (15), passes, the said opening being elongate in the direction of displacement so as to allow the tightening member to move therein with respect to the lug (9).

7. Method according to Claim 6, **characterized in that** the tightening member tightens a stack comprising, in order, a mounting lug (15) secured to the support, a first insert element (21) in the form of a washer, the said lug (9) of the fluid box and a second insert element (20) in the form of a washer.

8. Method according to Claim 7, **characterized in that** each insert washer (20, 21) comprises, juxtaposed in the direction of stacking, an outer region (23) wider than the width of the elongate opening, which presses against the corresponding face (24, 25) of the lug of the fluid box, and an inner region (26) slightly narrower than the width of the opening (13), which enters the opening and guides the tightening member along this opening.

9. Method according to one of Claims 2 to 8, **characterized in that** there is provided, in the third mounting region, a lug (7) projecting from the wall of the corresponding fluid box (1), one of the faces of which defines a contact surface of the exchanger and in which a circular opening (14) through which a tightening member such as a bolt passes, so as to immobilize the said lug with respect to the support.

10. Method according to one of Claims 6 to 9, **characterized in that** the said lugs both run in the same mid-plane of the heat exchanger, parallel to the longitudinal directions of the fluid boxes and of the tubes, and more or less at right angles to the walls of the fluid boxes.

11. Method according to one of the preceding claims, **characterized in that** the insert elements (20, 21) are made of a material with a low coefficient of friction and good compression strength.

12. Assembly such as can be obtained by the method according to one of the preceding claims, comprising a heat exchanger (1-3) intended to have a fluid at high temperature running through it, and a support (15) to receive the heat exchanger on the chassis and/or on the bodywork of a vehicle, this assembly being equipped with means for mounting the exchanger on the support which means are distributed over an at least first, second and third mounting regions (6, 9, 7), the first and second regions being remote from the third region in different respective directions, the mounting means comprising, in each of the said regions, at least one contact surface (27) belonging to the support (15), at least one contact surface (25) belonging to the exchanger and a tightening member (16) able to urge the said contact surfaces towards each other, with the possible insertion of at least one insert element (21), the mounting means being able, in each of the first and second regions, to allow relative displacement of the contact surfaces of the support and of the exchanger in a determined direction, and preventing any relative displacement of the said contact surfaces in the third region, the direction of the relative displacement in each of the first and second regions being more or less coincident with the direction in which this region is separated from the third region, and the tightening means of the first and second regions being tightened in such a way as to allow relative sliding of the corresponding contact surfaces of the support and of the exchanger as the exchanger experiences thermal expansion, while at the same time immobilizing them one with respect to the other when this heat exchanger is in thermal equilibrium.
